# EUROPEAN PATENT SPECIFICATION

(11) **EP 3 286 512 B1**
(45) Date of publication and mention of the grant of the patent: **05.06.2019**
(21) Application number: 16726424.1
(22) Date of filing: 21.04.2016
(51) Int. Cl.: F28D 7/16

(54) **TUBE-BUNDLE HEAT EXCHANGER WITH IMPROVED STRUCTURE**
ROHRBÜNDELWÄRMETAUSCHER MIT VERBESSERTER STRUKTUR
ÉCHANGEUR DE CHALEUR À FAISCEAU TUBULAIRE PRÉSENTANT UNE STRUCTURE AMÉLIORÉE

(30) Priority: 24.04.2015 IT UB20150270
(43) Date of publication of application: 28.02.2018
(73) Proprietor: Hexsol Italy S.r.l., 24121 Bergamo (BG) (IT)
(72) Inventor: ZANARDI, Luca, I-24125 Bergamo (IT); FOGLIENI, Fabiano, I-24033 Calusco D'Adda (BG) (IT)
(74) Representative: Lampis, Marco
(86) International application number: PCT/IB2016/052259
(87) International publication number: WO 2016/170487

(56) References cited:
- BE-A- 436 780
- DE-A1- 19 639 422
- DE-U1- 8 601 340
- FR-A1- 2 518 730
- US-A1- 2008 038 165

## Description

In the commonly known technique there are many types of heat exchangers for the most disparate uses.

For example, DE19639422 describes an air/water heat exchanger for large diesel engines. DE8601340 describes an air dryer, which obviously does not work under pressure, and has solely simple gaskets sealing the ends of the tubes through which the fluid flows. The document BE436780A represents a document which shows the features of the preamble of claim 1.

The present invention refers instead to a heat exchanger of the type with a pressurised shell and a tube bundle between the inlet and outlet tubesheets. In particular, the exchanger is of the kind with at least one tubesheet, of the 'thin' kind, i.e. with the tubesheet designed to be relatively flexible and to withstand the internal pressure of the exchanger. In still greater detail, the exchanger is a TLE (Transfer Line Exchanger) used in the ethylene production cycle.

Existing tube bundle exchangers available on the ethylene market are essentially divided into two large categories: those with flexible tubesheets and those with reinforced tubesheets.

The former promote deflection of the tubesheets as a result of the internal pressure between the tubesheets and thus mitigate secondary stresses acting on the tubes (due to elongation of the tubes as a result of thermal expansion) but they work with higher primary stresses acting on the tubesheet (the strains being proportional to the deformations resulting from elastic reactions) and with tubes working under traction. The latter work with low primary stresses (with tubesheets always remaining flat) but the tubes are physiologically subjected to working in compression, with potential risks of buckling and Euler instability.

The thin tubesheet exchangers are therefore preferable for some aspects.

It is true that the TLEs with flexible tubesheets are, however, subject to a potential risk in the event of corrosion of the coupling region between the tubes and tubesheet and/or in correspondence with holes in the diaphragms; in fact the rupture of a tube in the bundle results in the axial thrust from such tube being suddenly spread over the neighbouring tubes, with an increase in the stress acting thereupon and a potential chain reaction consisting of the tubes breaking, with the sudden collapse of the entire exchanger.

Furthermore, the tube bundle exchangers, especially the TLE kind for ethylene, suffer from a considerable erosion problem caused by the gas in the inlet tubesheet ("hot" tubesheet) as a result of the particulate (coke) being dragged by the high speed gases (>100 m/s).

Because of the conical diffuser which connects the gas arrival point with the tubesheet and which facilitates the entry in the central part of the bundle and penalises the peripheral tubes, there is also localised erosion primarily in the centre of the tubesheet, where strains can be greater.

The said potential poor distribution of the hot flue gases in the tubes, due to the conical diffuser facilitating entry in the central part of the bundle and penalising the peripheral tubes, can lead to localised overheating and excessive thermal stresses on the tubesheet and on the tube/tubesheet joints.

There is, in fact, a possibility of high corrosion on the 'hot' inlet tubesheet on the shell side due to areas of flow which are either dead or stagnant in the lowest points of the natural circulation circuit (thermosyphon) and which are not properly cooled.

Finally, in the (classic) configuration of a TLE with the ascending vertical flue gas motion, a concentration of vapour bubbles can also be generated in the upper part of the TLE behind the outlet tubesheet ("cold" tubesheet) with potential stagnation/blanketing which triggers overheating and/or high levels of accrued deposition of corrosive substances on the terminal part of the tubes in contract with the tubesheet.

Fluid dynamic instability can also be generated during the two-phase descending vertical motion which carries the mixture of coolant (generally, water and vapour) to the outlet pipe or pipes, due to the continuous variation of the working point and potential scenarios with low Froude numbers in the liquid phase, which trigger a countercurrent motion between the liquid phase and the vapour phase rather than a cocurrent motion of the two phases in the descending duct.

To endeavour to improve the situation, various solutions have been proposed within the commonly known technique to endeavour to render water distribution uniform in the lowest point of the circuit (still with reference to a TLE with ascending vertical flue gas motion).

For example, it has been proposed that a side-to-side flow scrubbing action be performed on the tubesheet by means of a suitably shaped diaphragm appropriately spaced from the tubesheet.

However, such solution produces a unidirectional high speed, but also stagnation in the direction perpendicular to the flow and in the shaded areas of the tubes.

In addition, the unidirectional high speed causes a high loss of concentrated load and therefore a decrease in the radiator's recirculation ratio.

Furthermore, there is an increased possibility of stratification of the corrosive water deposits on the upper face of the diaphragm in correspondence with the through holes for the fluid.

It has also been proposed that water channelling be provided by means of ducts or tunnels, but such arrangement renders it necessary to ensure that water be drawn upwards in each tunnel in order to wet the surface of the tubes within a rigid tubesheet anchored to the flexible tubesheet. There is, therefore, a reduction in the flow rate at the end of the tunnel, a reduction for which it has been attempted to compensate by shaping the ducts with a section which grows gradually smaller so as to compensate for this effect and maintain high speeds which prevent scaling and deposits. Nevertheless, the high speeds result in a further high loss of concentrated load and therefore a decrease in the radiator's recirculation ratio.

It has also been proposed that there be water inlets in rings which are concentric to the flue gas tubes, but such arrangement leads to high losses of the inlet load within the ring, because the equivalent diameter of the annular geometry is small. Therefore, there is a greater possibility of clogging due to dragged deposits, resulting in local overheating of the tube wall in correspondence with the inlet. In addition, there are high speeds due to the reduced section of the passageway of the rings, which means a high loss of concentrated load and therefore a decrease in the radiator's recirculation ratio.

FR2518730 describes an example of a simple heat exchanger with thick tubesheets. US2008/038165 is an example of an exchanger for ammonia synthesis with a single thick tubesheet at one end of the bundle and no tubesheet at the other end.

BE436780 describes a water/oil exchanger with exchanging tubes arranged between the tubesheets, which also fill the central zone of the exchanger. Three tie rods are arranged around the periphery of the exchanging tube bundle in order to support diaphragms within the exchanger.

The main aim of the present invention is to provide an exchanger with a tube bundle and flexible tubesheet which overcomes the drawbacks of the commonly known technique, with a simple and efficient structure and greater operating safety.

In view of this aim, the decision was made to produce, according to the invention, a heat exchanger with a pressurised shell and a tube bundle with exchanging tubes between flexible tubesheets, characterised by the fact that the flexible tubesheets are reciprocally interconnected by tie rods in a central zone of the tubesheets which is devoid of exchanging tubes and the exchanging tubes in the tube bundle are arranged around such tie rods.

According to a further aspect of the invention, the heat exchanger is characterised by the fact that transverse diaphragms are arranged along the tube bundle for conveying the exchanging fluid, alternating in shape between discs and rings along the axis of the bundle and, preferably, the diaphragm closest to a tubesheet is ring-shaped. Advantageously, the ring-shaped diaphragms have a central passageway which is crossed solely by tie rods.

To provide a clearer explanation of the innovative principles of the present invention and the advantages thereof with respect to the commonly known technique, an exemplifying embodiment in which the said principles are applied will be described below, with the help of the accompanying drawings. In the drawings:
- Figure 1 is a schematic, partially sectioned, side view of an exchanger according to the invention;
- Figure 2 shows a schematic, cross-sectioned view of a first possible arrangement of the tube bundle in the exchanger shown in Figure 1;
- Figure 3 shows a schematic, cross-sectioned view of a second possible arrangement of the tube bundle in the exchanger shown in Figure 1;
- Figure 4 shows a schematic, cross-sectioned view according to line IV-IV in Figure 1;
- Figure 5 shows a schematic, cross-sectioned view according to line V-V in Figure 1;
- Figure 6 shows a schematic, cross-sectioned view (according - generally - to line V-V in Figure 1) of a possible embodiment of areas, in proximity to the tubesheets, for the inlet and outlet of the coolant within an exchanger according to the invention;
- Figure 7 shows a partial schematic view of a section according to line VII-VII in Figure 6;
- Figure 8 shows a schematic, partial, sectioned view of a possible variant of a central zone of the tubesheet in an exchanger according to the invention.

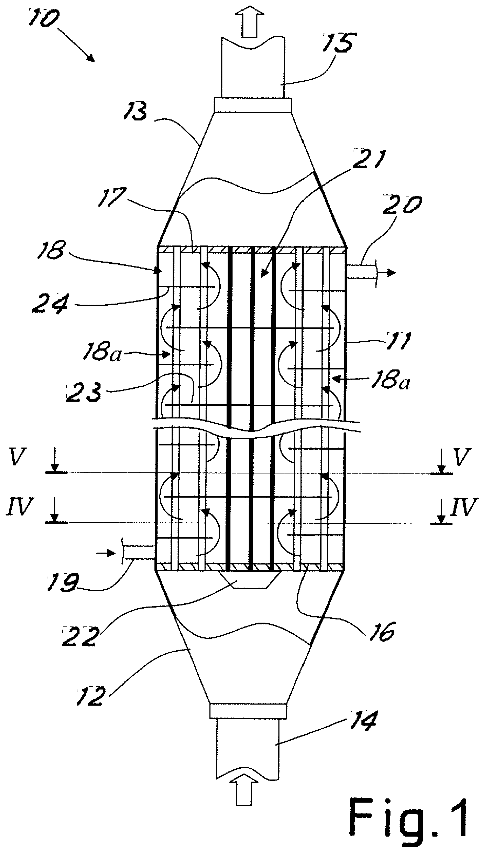

With reference to the figures, Figure 1 shows an exchanger as a whole denoted by 10, produced according to principles of the present invention.

The exchanger 10 comprises a pressurised shell 11, at the opposite ends of which there are conical diffusers or manifolds 12, 13, to which pipes 14, 15 are fitted for the inlet and outlet of the fluid to be cooled (for example, ethylene steam). A tube bundle 18 is arranged in the shell between the tubesheets 16 and 17 in order to be immersed in the exchanging fluid (e.g. water) which circulates in the exchanger via inlet and outlet pipes 19 and 20. The tubesheets are of the kind known as "thin" and are, therefore, flexible tubesheets, which means that the capacity to withstand flexion due to the internal pressure of the exchanger is ensured by the said tube bundle welded between the tubesheets, and the tubesheets flex outwards also due to the thermal expansion of the bundle.

According to the principles of the invention, the tube bundle advantageously comprises a central zone devoid of tubes and in such area the tubesheets are reciprocally interconnected by tie rods 21. The tubes, denoted as a whole with 18a and intended to be flowed through by the fluid to be cooled, are arranged around the central zone with the tie rods 21. As can be seen in the figures, the central zone - devoid of tubes but equipped with tie rods - comprises the centre of the tubesheets. Essentially, the core of the bundle is composed solely of tie rods which do not take part in the circulation of the fluid to be cooled and the tubes are arranged in a torus around the tie rods.

Advantageously, the area with solely tie rods can be, approximately, in correspondence with the section of the inlet pipe 14. The tie rods can be filled with solid metal elements or tubes similar to the tubes in the bundle but sealed at the ends. Generally, the inertia and section surface area thereof will be comparable to that of the exchanging tubes.

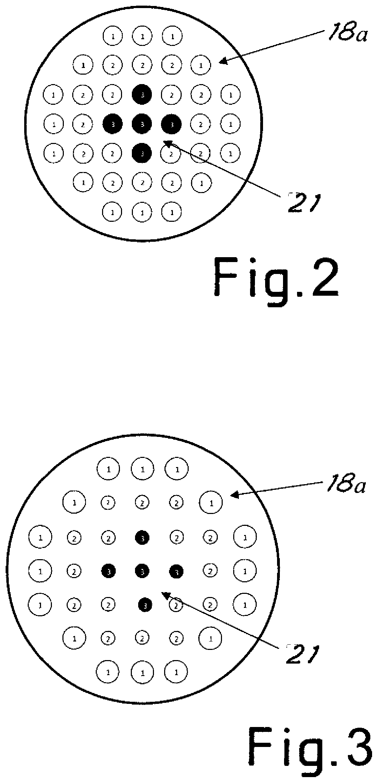

Figure 2 shows, by way of example, a possible arrangement of the bundle, showing the central tie rods (advantageously arranged in a crosswise fashion) and the tubes surrounding such tie rods.

The tie rods between the tubesheets help to withstand the pressure thrust between the tubesheets. In other words, the tie rods can transfer the pressure thrust acting on the said tubesheets from one tubesheet to the other.

The innovative structure of the exchanger which features flexible tubesheets with the presence of tie rods in the central part of the bundle and exchanging tubes solely around the tie rods provides various advantages.

First and foremost, the tie rods are immersed in the cooling fluid just like the tubes but, since such rods are not flowed through by the hot fluid, they have the same temperature as the cooling fluid (for example, in an exchanger for ethylene with exchanging water, such rods can be - for example - approximately 10 °C colder than the exchanging tubes surrounding them).

The arrangement is therefore advantageous because the buckling of the flexible tubesheets due to the pressure is mitigated in the central part by the different temperature profiles of the tubes and tie rods. Since the stresses are proportional to the deformations, the central part of the flexible tubesheets is less stressed than in the commonly known design solutions.

At the same time, the tubes are also less stressed by an axial load, because the further away one moves from the centre, proceeding outwards in a radial fashion, the more the axial stress decreases and the more the flexural stress increases due to the flexion (buckling due to pressure) of the tubesheet.

Thanks to the decrease in the axial forces on the tubes and the improved diversion of the flow towards the peripheral tubes, the gas distribution in the tubes can be optimised.

In fact, the gas flow is diverted to the tubes surrounding the tie rods and a more uniform distribution of the gas can be obtained in all the exchange tubes, in addition to a minimisation of the formation of vortices and a reduced time of stay in the distribution cone for the flue gas (i.e. better yield from the rapid flue gas cooling reactions).

The improved distribution of axial forces within the bundle also means that the wall of the most outer peripheral tubes (where the flexural stress component is greater than the axial stress) can be thinner, thereby increasing the internal aperture of the passageway. Alternatively, it is also possible to increase the diameter of the outer tubes as shown, by way of example, in Figure 3.

In any case, an increased passageway aperture at the periphery of the bundle results in the gas particles - which have to travel freely along a route which is, on average, longer in order to reach the peripheral tubes - having nevertheless the advantage of being exposed to a greater surface area and therefore lower losses of pressure.

Incidentally, the thicker tubes in the inner part have a greater margin against potential catastrophic ruptures in the event of thinning due to corrosion (even though, with the solution described here, corrosion is either reduced or eliminated).

Returning to Figure 1, an insert 22 can also be featured, arranged in correspondence with the tie rods on the inlet tubesheet 16 on the hot side, in order to reduce the volume in the inlet conical diffuser.

This allows the time of stay of the fluid in the conical diffuser to be reduced and improved protection of the hot tubesheet to be offered. Furthermore, diversion is the fluid towards the inlets of the tubes in the bundle is further improved.

The insert 22, with a form which is generally tapered in the incoming flow direction, can be easily optimised by means of a computational fluid dynamics system, in order to better match the conformation of the conical diffuser. The insert can be made in one piece with the tubesheet or fitted thereonto in various ways, for example by keying. A removable fitting can be advantageous in order to be able to replace the insert when, possibly, worn, thereby constituting a sacrificial tubesheet for the protection of the thin tubesheet therebehind.

As can be seen, again in Figure 1, diaphragms can also be used in the exchanger according to the invention, arranged transversely along the bundle, to convey the exchanging fluid.

Advantageously, such diaphragms have the form of discs 23 and rings 24, which alternate along the axis of the bundle in order to ensure circulation as shown by the arrows in Figure 1, in other words, winding between a peripheral passageway and a central passageway. The exchanger (in particular a TLE) is, in fact, preferably vertical, with an ascending motion of the fluid (flue gases) to be cooled.

As seen in Figure 1, the first and the last diaphragm have, advantageously, a ring conformation. This is possible due to the fact that, in the central passageway of the ring-shaped diaphragm, where the flow of cooling fluid passes, solely the tie rods are, advantageously, present. In fact, in general, the central part of the tubesheet is exposed to a speed of approximately zero and therefore there is always a risk, in such central zone, of the accumulation of debris/deposits with consequent overheating locally, since the deposits and fouling in general are an additional thermal resistance which prevents removal of the heat from the tubesheet by the cooling fluid.

If, according to the commonly known technique, there were no exchange tubes in such central zone, the use of ring-shaped diaphragms in proximity to the tubesheets would be impossible because such arrangement would involve an unacceptable increase in the tubesheet temperature due to the deposits, which would not allow correct removal of the heat conveyed into such zone by the exchange tubes.

With the principles of the present invention, a possible accumulation of deposits in the central zone of the tubesheet does not, however, result in a rise in temperature locally because the central part of the bundle is not fed with hot fluid.

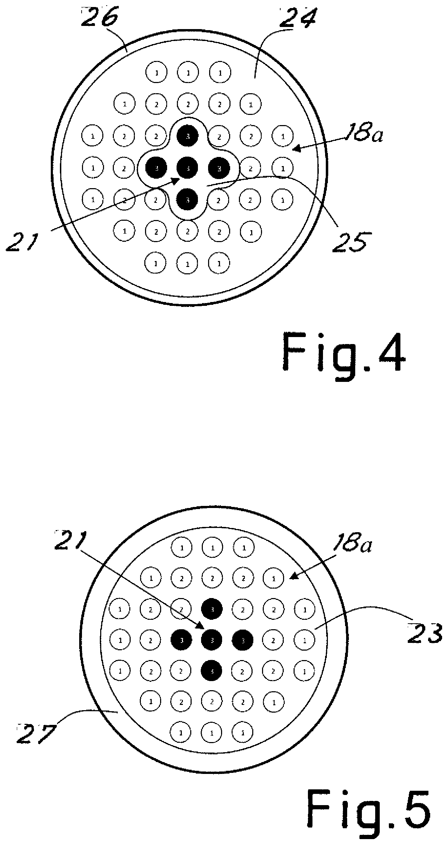

In Figure 4, there is a section of the exchanger shown which shows an advantageous embodiment of one of the ring-shaped diaphragms 24, with the central hole 25 whose perimeter follows the contour of the bundle of tie rods 21 (for example, advantageously arranged in a cross fashion) so that the solid crown part of the baffle is traversed by the exchange tubes and, preferably, supported thereby. The baffle may also have a minimum space between the peripheral edge thereof and the inner wall of the exchanger 26.

In Figure 5, however, there is a section of the exchanger shown which shows an advantageous embodiment of one of the disc-shaped diaphragms 23, with ample peripheral space 27 for circulation of the exchanging fluid between the two sides of the disc fluid.

Advantageously, the possibility of using ring-shaped diaphragms in proximity to the internal faces of the tubesheets also allows improved inlet and outlet circulation of the cooling fluid.

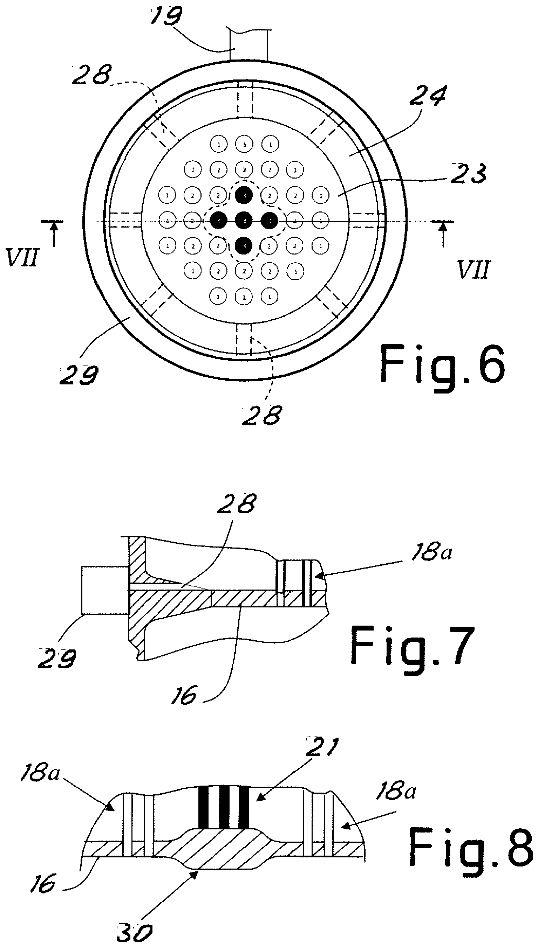

As shown in the embodiment in Figures 6 and 7, radial channels 28 can be advantageously featured on the edge of the tubesheet within the exchange chamber. The channels 28 are connected to the respective inlet pipes 19 through a connection pipe, for example, in the form of a torus 29 around the periphery of the exchanger.

Advantageously, such channels are a plurality and are distributed evenly around the circumference of the tubesheet.

The radial channels 28 face the interior of the exchanger in order to take in the flow of cooling fluid between the tubesheet and the facing ring-shaped baffle.

Advantageously, the opposite end of the exchange chamber can also feature a similar structure of radial channels 28 for the outlet of exchanging fluid in proximity to the opposite tubesheet 17.

The possibility of having multiple water inlets and at least one exchanging fluid outlet (which, at the outlet, can be a mixture of water plus steam), which is completely radial and allows a more uniform distribution of the fluid and overcomes various problems encountered with the commonly known systems.

For example, with reference to a standard vertical TLE with ascending hot flue gases, the solution described above prevents a descending vertical two-phase flow, which would be unstable and/or pulsatile for certain operating points/surface speeds of the liquid and vapour phases.

The described adduction and extraction arrangement for the exchanging fluid also allows a circular fluid flow symmetry and a configuration known as a 'No Tubes In The Window' configuration, in which all the heat exchange tubes have the same Euler's critical load, regardless of the radial position thereof within the bundle.

Moreover, by placing the outlet pipe of water/steam mixture flush with the upper tubesheet, the 'downflow' area is eliminated. By creating a torus, with multiple access points, which collects the steam coming from all radial directions, pockets of steam are prevented from forming on the top of the exchanger.

Figure 8 shows a further advantageous embodiment, according to which the tubesheet has a local thickening 30 in the central part, in correspondence with the tie rods 21, which can be used as a corrosion/erosion allowance. This thickening is always possible thanks to the fact that, with the structure according to the invention, the central part of the tubesheet is always at approximately the same temperature as the exchanging fluid. The thickening can also implement or comprise the external flow diversion insert.

At this point, it is clear how the intended aims are achieved. A tube bundle exchanger with flexible tubesheets produced according to the invention is prone to much fewer erosion and corrosion effects and also allows greater efficiency and flexibility of use. Also, it should be noted that, thanks to the principles of the invention, it is also possible to produce an exchanger which is symmetrical with respect to the transverse plane, i.e., which can be overturned, for example, to extend the working life thereof.

Naturally, the description set out above of an embodiment applying the innovative principles of the present invention is given by way of example of such innovative principles and therefore must not be deemed a limitation of the patent right claimed here. For example, the proportions of the various parts of the exchanger may vary with respect to that shown in the drawings in order to adapt to specific requirements, as is easily imaginable by persons skilled in the art. Also the number of tubes, tie rods and any disc or ring-shaped internal diaphragms may vary depending on the embodiment and the specific requirements.

Finally, there may be various techniques for fastening the tube bundle to the tubesheets, as is easily imaginable by persons skilled in the art. For example it may be advantageous to use Internal Bore Welding welds (IBW), as are known by persons skilled in the art and as shown schematically in Figure 7, for the tube on the left.

## Claims

1. A heat exchanger (10) with a pressurised shell (11) and a tube bundle (18) with exchanging tubes (18a) between flexible tubesheets (16, 17), whereby the flexible tubesheets (16, 17) are reciprocally interconnected by a plurality of tie rods (21) in a central zone of the tubesheets (16, 17) **characterized in that** said central zone is devoid of exchanging tubes (18a) and the exchanging tubes (18a) in the tube bundle (18) are arranged around such plurality of tie rods (21).

2. A heat exchanger according to Claim 1, **characterised by** the fact that the exchanging tubes (18a) at the periphery of the bundle (18) have a wall thickness which is less than the wall thickness of the other exchanging tubes (18a) in the bundle.

3. A heat exchanger according to Claim 1, **characterised by** the fact that the exchanging tubes (18a) at the periphery of the bundle have a diameter which is greater than that of the other exchanging tubes (18a) in the bundle.

4. A heat exchanger according to Claim 1, **characterised by** the fact that transverse diaphragms are arranged along the tube bundle (18) for conveying the exchanging fluid, alternating in shape between discs (23) and rings (24) along the axis of the bundle.

5. A heat exchanger according to Claim 4, **characterised by** the fact that the diaphragm closest to a tubesheet is ring-shaped.

6. A heat exchanger according to Claim 4, **characterised by** the fact that the ring-shaped diaphragms (24) have a central passageway (25) which is crossed solely by tie rods.

7. A heat exchanger according to Claim 1, **characterised by** the fact that at least the inlet tubesheet (16) has an insert (22) protruding from the hot side of the tubesheet in the central zone, in correspondence with the tie rods.

8. A heat exchanger according to Claim 1, **characterised by** the fact that at least the inlet tubesheet (16) has a greater thickness in the central zone featuring the connection with the tie rods (21) than in the peripheral part of the tubesheet.

9. A heat exchanger according to Claim 1, **characterised by** the fact that, in proximity to at least the inlet tubesheet (16), there are radial channels (28) present for the inlet of exchanging fluid.

10. A heat exchanger according to Claim 1, **characterised by** the fact that, in proximity to at least the outlet tubesheet (17), there are radial channels (28) present for the outlet of exchanging fluid.

11. A heat exchanger according to Claims 9 or 10, **characterised by** the fact that the radial channels (28) are circumferentially evenly spaced.

12. A heat exchanger according to Claims 9 or 10, **characterised by** the fact that the radial channels (28) are surrounded by and connected to a toroidal pipe (29) for the intake and outlet of exchanging fluid.

## Patentansprüche

1. Wärmetauscher (10) mit einer unter Druck stehenden Hülle (11) und einem Rohrbündel (18) mit Wärme-tauschenden Rohren (18a) zwischen elastischen Rohrböden (16, 17), worin Die elastischen Rohrböden (16, 17) gegenseitig durch mehrere Zugstäbe (21) in einer zentralen Zone der Rohrböden (16, 17) verbunden sind, **dadurch gekennzeichnet, dass** die zentrale Zone frei von Austauschrohren (18a) ist, und
worin die Austauschrohre (18a) in dem Rohrbündel (18) um die mehreren Zugstäbe (21) angeordnet sind.

2. Wärmetauscher nach Anspruch 1, **dadurch gekennzeichnet, dass** die Austauschrohre (18a) im Umfang des Bündels (18) eine geringere Wanddicke aufweisen als die Wanddicke der anderen Austauschrohre (18a) in dem Bündel.

3. Wärmetauscher nach Anspruch 1, **dadurch gekennzeichnet, dass** die Austauschrohre (18a) im Umfang des Bündels einen größeren Durchmesser haben als der der anderen Austauschrohre (18a) in dem Bündel.

4. Wärmetauscher nach Anspruch 1, **dadurch gekennzeichnet, dass** querverlaufende, in Form zwischen Scheiben (23) und Ringen (24) entlang der Achse des Bündels variierende Scheidewände zum Befördern des Austausch-Fluids entlang des Rohrbündels (18) angeordnet sind.

5. Wärmetauscher nach Anspruch 4, **dadurch gekennzeichnet, dass** die dem Rohrboden nächst-liegende Scheidewand ringförmig ist.

6. Wärmetauscher nach Anspruch 4, **dadurch gekennzeichnet, dass** die ringförmigen Scheidewände (24) einen zentralen Durchgang aufweisen (25), der nur durch Zugstangen durchzogen wird.

7. Wärmetauscher nach Anspruch 1, **dadurch gekennzeichnet, dass** mindestens der Einlass-Rohrboden (16) einen von der der heißen Seite des Rohrbodens in der zentralen Zone vorstehenden, in Verbindung mit den Zugstangen stehenden Einsatz (22) aufweist.

8. Wärmetauscher nach Anspruch 1, **dadurch gekennzeichnet, dass** mindestens der Einlass-Rohrboden (16) in der zentralen Zone eine die Verbindung mit den Zugstangen (21) aufweisende größere Dicke als in dem Umfangs-Teil des Rohrbodens aufweist.

9. Wärmetauscher nach Anspruch 1, **dadurch gekennzeichnet, dass** in Nähe zu mindestens dem Einlass-Rohrboden (16) radial verlaufende Kanäle (28) zum Einlass des Austauschfluids vorhanden sind.

10. Wärmetauscher nach Anspruch 1, **dadurch gekennzeichnet, dass** in Nähe zu mindestens dem Auslass-Rohrboden (17), radial verlaufende Kanäle (28) zum Auslass des Austausch-fluids vorhanden sind.

11. Wärmetauscher nach Ansprüchen 9 oder 10, **dadurch gekennzeichnet, dass** die radial verlaufenden Kanäle (28) umlaufend gleichmäßig beabstandet sind.

12. Wärmetauscher nach Ansprüchen 9 oder 10, **dadurch gekennzeichnet, dass** die radial verlaufenden Kanäle (28) zur Aufnahme und zum Auslass des Austauschfluids von einer ringförmigen Röhre (29) umgeben und damit verbunden sind.

## Revendications

1. Echangeur de chaleur (10) avec une enveloppe sous pression (11) et un faisceau tubulaire (18) avec des tubes d'échange (18a) entre des plaques tubulaires flexibles (16, 17), moyennant quoi les plaques tubulaires flexibles (16, 17) sont interconnectées, de manière réciproque, avec une pluralité de tirants (21) dans une zone centrale des plaques tubulaires (16, 17), **caractérisé en ce que** ladite zone centrale est dépourvue de tubes d'échange (18a) et les tubes d'échange (18a) dans le faisceau tubulaire (18) sont agencés autour d'une telle pluralité de tirants (21).

2. Echangeur de chaleur selon la revendication 1, **caractérisé en ce que** les tubes d'échange (18a) à la périphérie du faisceau (18) ont une épaisseur de paroi qui est inférieure à l'épaisseur de paroi des autres tubes d'échangeur (18a) dans le faisceau.

3. Echangeur de chaleur selon la revendication 1, **caractérisé en ce que** les tubes d'échange (18a) à la périphérie du faisceau ont un diamètre qui est supérieure à celui des autres tubes d'échange (18a) dans le faisceau.

4. Echangeur de chaleur selon la revendication 1, **caractérisé en ce que** des diaphragmes transversaux sont agencés le long du faisceau tubulaire (18) pour transporter le fluide d'échange, alternant du point de vue de la forme entre des disques (23) et des anneaux (24) le long de l'axe du faisceau.

5. Echangeur de chaleur selon la revendication 4, **caractérisé en ce que** le diaphragme le plus proche d'une plaque tubulaire est de forme annulaire.

6. Echangeur de chaleur selon la revendication 4, **caractérisé en ce que** les diaphragmes de forme annulaire (24) ont une voie de passage centrale (25) qui est traversée uniquement par les tirants.

7. Echangeur de chaleur selon la revendication 1, **caractérisé en ce qu'**au moins la plaque tubulaire d'entrée (16) a un insert (22) faisant saillie du côté chaud de la plaque tubulaire dans la zone centrale, en correspondance avec les tirants.

8. Echangeur de chaleur selon la revendication 1, **caractérisé en ce qu'**au moins la plaque tubulaire d'entrée (16) a une épaisseur plus importante dans la zone centrale présentant le raccordement avec les tirants (21) que dans la partie périphérique de la plaque tubulaire.

9. Echangeur de chaleur selon la revendication 1, **caractérisé en ce que**, à proximité d'au moins la plaque tubulaire d'entrée (16), il y a des canaux radiaux (28) présents pour l'entrée du fluide d'échange.

10. Echangeur de chaleur selon la revendication 1, **caractérisé en ce que**, à proximité d'au moins la plaque tubulaire de sortie (17), il y a des canaux radiaux (28) présents pour la sortie du fluide d'échange.

11. Echangeur de chaleur selon les revendications 9 ou 10, **caractérisé en ce que** les canaux radiaux (28) sont régulièrement espacés de manière circonférentielle.

12. Echangeur de chaleur selon les revendications 9 ou 10, **caractérisé en ce que** les canaux radiaux (28) sont entourés par et raccordés à un tuyau toroïdal (29) pour l'admission et la sortie du fluide d'échange.
